# DEMANDE DE BREVET EUROPEEN

(11) **EP 1 164 798 A1**
(43) Date de publication de la demande: **19.12.2001**
(21) Numéro de dépôt: 00401695.2
(22) Date de dépôt: 15.06.2000
(51) Int. Cl.: H04N 7/24, H04N 5/00, H04Q 11/04, H04L 29/06, G06F 13/38

(54) **Emetteur de diffusion de données sur une pluralité de canaux comportant des filtres logiques pour les données à émettre**

(71) Demandeur: SAGEM S.A., 75116 Paris (FR)
(72) Inventeur: Le Gourrierec, Marc, 75013 Paris (FR)
(74) Mandataire: Bloch, Gérard

(57) **Abrégé**

L'émetteur de diffusion de données numériques comporte des circuits de réception de divers flux de données entrants sur des canaux de réception respectifs (1-2, 23), des circuits (31, 33) de transfert de données des flux vers des canaux d'émission (341 - 344) et, entre les circuits de réception (1-2, 23) et les circuits de transfert (31, 33), des circuits de filtrage logique (24-26) pour sélectionner des données des flux entrants des canaux de réception (1 - 2, 23) et pour les aiguiller par l'intermédiaire des circuits de transfert (31, 33) vers des canaux d'émission (341 - 344) déterminés en fonction de la sélection.

## Description

Un réseau de diffusion d'informations numériques, telles que des programmes de télévision numérique ou des données informatiques, permet à un émetteur unique d'atteindre directement un grand nombre de récepteurs.

De ce fait, le réseau peut se développer sans nécessité d'investissements en équipements de commutation. Chaque récepteur reçoit la totalité du flux d'informations diffusées et sélectionne lui-même les informations désirées.

Comme il s'agit d'informations numériques, l'émetteur n'est pas limité à un type particulier d'informations et il peut donc offrir économiquement un grand nombre de services d'informations. Il est donc alimenté par plusieurs serveurs de flux d'informations numériques, telles qu'images et son de chaînes de télévision, prévisions météorologiques, cours de la bourse, informations d'actualité et autres.

L'émetteur diffuse un flux continu d'informations de types divers dans une pluralité correspondante de canaux, sous forme de paquets de données successifs. Afin que les récepteurs puissent sélectionner les paquets de leur canal, ceux-ci comportent chacun un Identificateur de Paquets (PID) du canal.

L'émetteur comporte, pour chaque canal de sortie, une voie de circuits de traitement qui reçoivent un flux d'informations déterminé et le mettent en paquets au format prévu pour le canal. Les différentes voies sont donc juxtaposées et leurs sorties sont reliées à un même circuit d'émission qui en prélève successivement les paquets pour les émettre de façon temporellement entrelacée. Chaque voie est donc spécialisée en fonction de la forme de présentation des informations qu'elle reçoit et de celle de ses paquets d'émission.

Cette gestion, par couples voie d'entrée-canal de sortie, des flux d'information est donc très rigide et, en particulier, on ne peut pas changer le canal d'émission d'un flux entrant ou encore émettre, sur un même canal, des informations provenant de plusieurs flux entrants.

La présente invention vise à procurer une plus grande souplesse d'exploitation des informations à diffuser.

A cet effet, l'invention concerne un émetteur de diffusion de données numériques comportant des moyens de réception de divers flux de données entrants sur des canaux de réception respectifs, des moyens de transfert de données des flux vers des canaux d'émission et, entre les moyens de réception et les moyens de transfert, des moyens de filtrage logique agencés pour sélectionner des données des flux entrants des canaux de réception et pour les aiguiller par l'intermédiaire des moyens de transfert vers des canaux d'émission déterminés en fonction de la sélection.

Ainsi, chacun des canaux d'émission peut être alimenté en données à partir de tout flux de données reçu et, en outre, les données qui y sont transférées sont sélectionnées en fonction de critères de sélection spécifiques au canal d'émission considéré.

L'invention sera mieux comprise à l'aide de la description suivante d'une forme préférée de réalisation de l'émetteur de l'invention, en référence au dessin annexé, sur lequel :
- la figure 1 est un schéma général par blocs de l'émetteur,
- la figure 2 illustre plus en détail la structure de l'émetteur,
- la figure 3 est un schéma d'un filtre logique d'un flux de données entrant dans l'émetteur, et
- la figure 4 illustre l'architecture d'un réseau de tels filtres de l'émetteur.

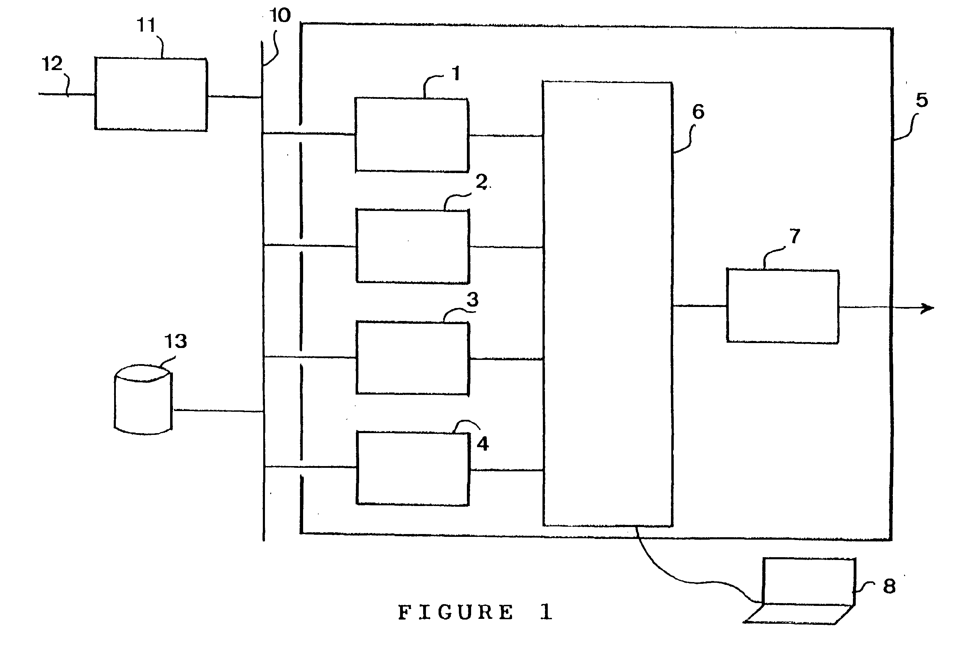

L'émetteur 5 représenté sur la figure 1 émet, par une pluralité de canaux d'émission temporellement multiplexés, des paquets de données à destination d'une pluralité de récepteurs, qui sélectionnent un ou plusieurs des canaux. Cette émission s'effectue par diffusion depuis une antenne d'un réseau de diffusion par satellite ou par une tête de station d'un réseau câblé.

L'émetteur 5 reçoit dans cet exemple M = 4 flux élémentaires de données dans M canaux de réception, ici sous forme de paquets de données, ou datagrammes, de longueurs diverses, et utilise ces datagrammes pour alimenter en sortie N = 4 canaux d'émission dans lesquels sont diffusés des paquets, au format voulu, représentant les datagrammes.

Les flux entrants sont reçus et mémorisés temporairement par M cartes respectives 1, 2, 3 et 4, ou canaux de réception, d'interface de liaison ETHERNET reliées à un réseau ETHERNET 10 alimenté en données par un routeur 11 de l'INTERNET 12 et par une base de données locale 13. D'une façon générale, l'émetteur 5 peut être alimenté en données à diffuser par tout réseau de transmission de données à mode de transmission paquet ou circuit. Les cartes 1-4 sont reliées en sortie à un ensemble de calcul 6 commandant un circuit émetteur 7 émettant vers un réseau de diffusion. Un PC 8 permet de commander l'ensemble de calcul 6, pour le configurer, par exemple. L'émetteur 5 fait ainsi office de passerelle entre divers serveurs de données et le réseau de diffusion.

Chaque canal d'émission est identifié par un identificateur appelé PID (Identificateur de Paquets) inséré dans chaque paquet diffusé. L'émetteur 5 dispose, pour chaque canal d'émission, de critères de sélection prédéterminés pour aiguiller certains des datagrammes reçus par les M cartes d'entrée 1-4 vers un canal d'émission considéré.

Certains critères de sélection peuvent être communs à plusieurs canaux d'émission. Ainsi, par exemple, un datagramme d'informations météorologiques pourra être diffusé dans un canal d'émission spécifique à la météorologie et, à certaines heures, aussi diffusé dans un canal d'émission d'informations générales. Ainsi, un émetteur tel que 5 comporte au moins une entrée (M ≥ 1) et plusieurs canaux de sortie (N ≥ 2) alimentés en données par cette entrée (fonction démultiplexeur logique). Dans le cas général tel que représenté ici, il y a M > 1 entrées et l'émetteur 5 a donc aussi, dans cet exemple, une fonction de multiplexeur, ou concentrateur, pour aiguiller, vers chacun des canaux d'émission, des datagrammes provenant de plusieurs cartes d'entrée 1-4. De ce fait, il a globalement ici une fonction de commutation ou brassage logique de M flux de canaux de réception vers N canaux d'émission. L'émetteur 5 a, en sortie, une fonction de multiplexeur ou concentrateur physique, pour fournir un flux unique de paquets successifs des divers canaux d'émission, multiplexés ou entrelacés temporellement pour être diffusés les uns après les autres.

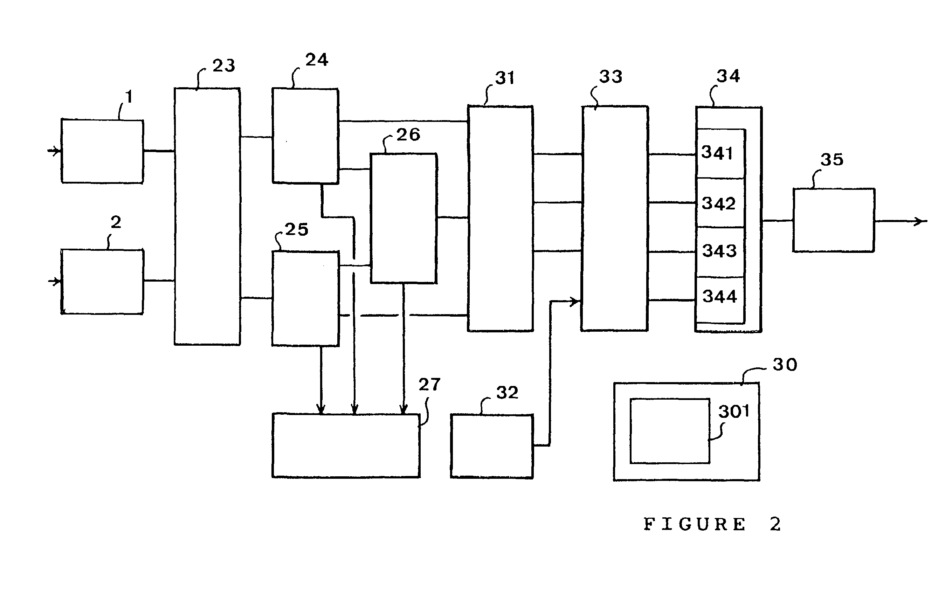

La figure 2 représente plus en détail l'ensemble de calcul 6 et illustre le cheminement ci-dessus des données dans l'émetteur 5. Pour simplifier l'exposé, on a ici réduit à M = 2 le nombre d'entrées de flux d'informations. Une unité centrale 30, avec des tables 301 de configuration, ou paramétrage, des divers canaux d'émission, commande les circuits représentés, par des liaisons non dessinées.

Les cartes 1, 2 alimentent, en données reçues depuis le réseau ETHERNET 10, telles que datagrammes, une mémoire tampon 23 à laquelle sont reliés en entrée M ensembles de filtres logiques 24, 25, eux-mêmes alimentant en datagrammes un ensemble de filtres 26. Une mémoire "de rebuts" ou corbeille 27, fictive, reliée aux ensembles de filtres 24-26, illustre le fait que ceux-ci peuvent rejeter les datagrammes entrants non conformes aux critères de sélection d'au moins l'un des filtres des ensembles 24-26. En variante, la mémoire 27 constitue un filtre 24-26 par défaut, passe-tout, qui transmet, vers un canal d'émission déterminé, tous les datagrammes rejetés par les autres filtres, sélectifs, ou éventuellement par certains d'entre eux, prédéterminés. Le traitement ultérieur des datagrammes de la mémoire-filtre 27 est le même que celui des datagrammes des autres filtres.

Les ensembles de filtres 24-26 sélectionnent des données dans les flux d'entrée et fournissent une pluralité de flux, sélectionnés par filtrage logique, à des circuits de transfert avec aiguillage, ou commutateur, 31 qui aiguillent ces flux sélectionnés vers un canal d'émission déterminé et qui ainsi regroupent certains des flux sélectionnés en fonction de critères liés à chacun des canaux d'émission. Les flux sélectionnés issus des circuits- 31 et classés par canal d'émission (PID) sont transmis à des circuits 33 de mise de ces flux à un format déterminé de paquets de transport TP, prévu pour la diffusion. Les circuits 33 reçoivent aussi des données d'information relatives à des tables MPEG2, provenant d'un circuit 32, qui décrivent le type des informations diffusées dans chaque canal d'émission et permettent ainsi aux récepteurs du réseau de diffusion de sélectionner un ou plusieurs canaux d'émission, en désignant, à travers elles, le ou les numéros PID qui conviennent. Les circuits 33 fournissent les N = 4 canaux d'émission sous forme de données mises en paquets dans les paquets de transport TP, de longueur fixée à 188 octets, à un circuit aval 34 qui entrelace temporellement, par multiplexage, les paquets TP des N canaux d'émission, pour les transmettre en série à un circuit d'émission 35, à partir de N files d'attente d'émission 341, 342, 343 et 344. Les files d'attente d'émission 341, 342, 343 et 344 représentent donc les canaux d'émission.

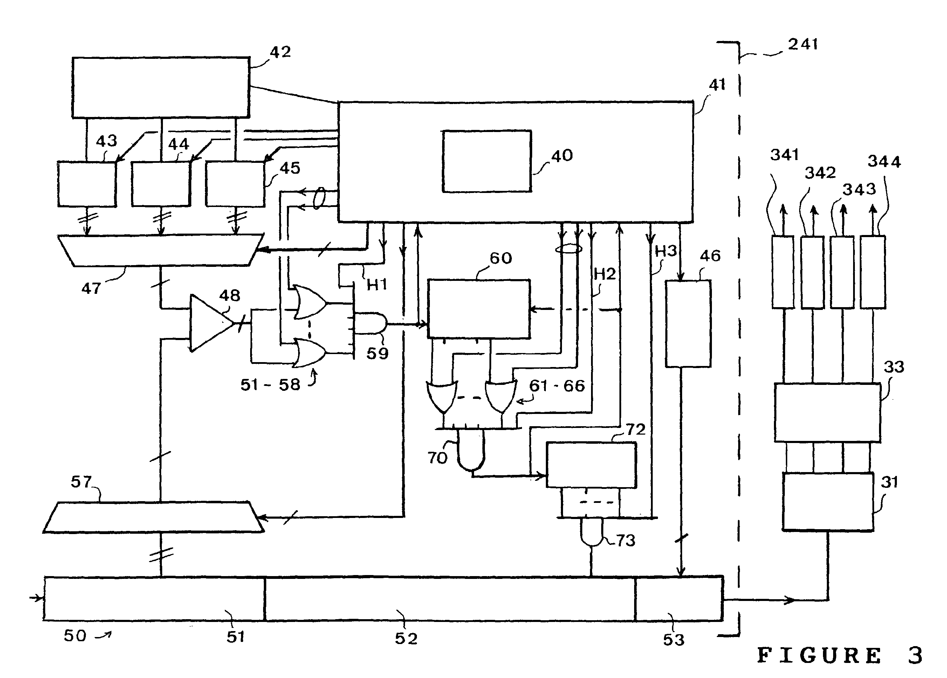

La figure 3 représente schématiquement un filtre 241 de l'ensemble de filtres 24 traitant un flux de données d'information reçues par une carte d'entrée 1-4 reliée au réseau ETHERNET 10. Le filtre 241 reçoit donc ici des paquets ETHERNET et en sélectionne certains, en fonction de critères mémorisés, pour commander leur aiguillage et leur transfert vers un canal d'émission associé.

Le filtre 241 comporte une unité centrale à microprocesseur 41 comportant à un circuit base de temps 40 qui en rythme le fonctionnement. En pratique, il s'agit d'une unité centrale commune à tous les filtres. Une mémoire de configuration 42, gérée par l'unité centrale 41, contient une pluralité de blocs de données, ici trois, relatifs chacun à un critère de sélection, ou filtrage, des données ETHERNET reçues et stockées provisoirement dans un registre tampon à décalage de réception, ou d'entrée, 50 alimenté en flux de données entrantes depuis la carte 1 à travers la mémoire tampon 23.

En sortie de la mémoire de configuration 42 sont reliés une pluralité de registres tampon de sélection de données du flux entrant, ici trois registres 43, 44, 45 commandés par l'unité centrale 41 pour chacun mémoriser des données représentant la valeur d'un des critères de sélection, exprimée sous la forme d'un certain nombre d'octets.

Un registre 46, d'exploitation des données sélectionnées, est chargé par l'unité centrale 41 par des données de commande des circuits 31 et 33, représentant le numéro du canal considéré, ou PID, ainsi que le format de mise en paquets TP, des données sélectionnées, qui convient pour l'émission sur ce canal. Le format des paquets ETHERNET reçus est en effet incompatible avec celui prévu pour la diffusion par l'émetteur 5. En outre, dans un autre exemple, certains des flux entrants pourraient être des flux continus en mode circuit, nécessitant donc une misé en paquets.

Les sorties des registres de sélection 43-45 sont reliées aux entrées d'un multiplexeur 47 dont l'adressage est commandé par l'unité centrale 41. Le multiplexeur 47 comporte 8 sorties en parallèle qui sont appliquées à huit premières entrées d'un comparateur multiple 48, traitant en parallèle les 8 bits d'un octet, dont les huit sorties sont reliées à huit entrées respectives d'une porte ET 59 à neuf entrées, à travers huit portes OU respectives à deux entrées 51 à 58, de masquage, ayant chacune une entrée de blocage, ou forçage à 1, commandée par l'unité centrale 41. La neuvième entrée de la porte ET 59 reçoit un signal d'horloge H1 de l'unité centrale 41. La sortie de la porte ET 59 commande l'entrée d'horloge d'un registre à décalage série/parallèle 60, de mémorisation des validations des divers octets de critère. Les sorties du registre 60, ici six, sont appliquées à six entrées respectives d'une porte ET 70, à sept entrées, de validation de critère de délection, à travers une rangée de portes OU de masquage, ici donc six portes référencées 61 à 66. La septième entrée de la porte ET 70 reçoit un signal d'horloge H2 de l'unité centrale 41. La sortie de la porte ET 70 commande une entrée d'horloge d'un registre à décalage série/parallèle 72, de mémorisation des validations des divers critères de sélection, dont les sorties, en nombre égal à celui des critères, ici trois, sont reliées aux entrées d'une porte ET 73, de validation de l'ensemble des critères, à quatre entrées recevant, sur la quatrième entrée, un signal d'horloge H3 de l'unité centrale 41. Sur la figure 3, les pointillés illustrent le fait qu'il peut y avoir plus de trois critères et donc que le registre 72 et la porte ET 73 peuvent être plus étendus. Les registres 60 et 72 comportent chacun une entrée de données, non représentée, polarisée en "1". La sortie de la porte ET 73 commande une entrée d'horloge du registre d'entrée 50.

Le registre 50 reçoit des paquets de données du réseau ETHERNET 10 comportant un champ d'en-tête 51 et un champ de données utiles 52. Dans un but de clarté, le circuit d'horloge d'écriture dans le registre 50 n'a pas été représenté. Un champ 53, pour des données d'exploitation des données 51, 52 reçues, est aussi prévu dans le registre 50 et peut être chargé en parallèle depuis le registre 46, sous la commande de l'unité centrale 41. Le registre 50 comporte, au moins dans sa partie réservée au champ d'en-tête 51, des sorties parallèles qui sont reliées à un multiplexeur 57 du même type et de même fonction que le multiplexeur 47. Le multiplexeur 57, adressé par l'unité centrale 41, permet de lire tout octet du champ 51 et de l'appliquer à huit secondes entrées du comparateur 48. On verra plus loin qu'il peut être prévu, pour un certain type de filtre, de lire le champ 52 de la même façon.

La sortie série du registre à décalage 50 est reliée aux circuits 31 qui transfèrent et aiguillent les données sélectionnées vers la file d'attente d'émission 341-344 du canal d'émission dont le PID se trouve dans le registre 46, à travers les circuits 33 de mise en paquets TP de diffusion.

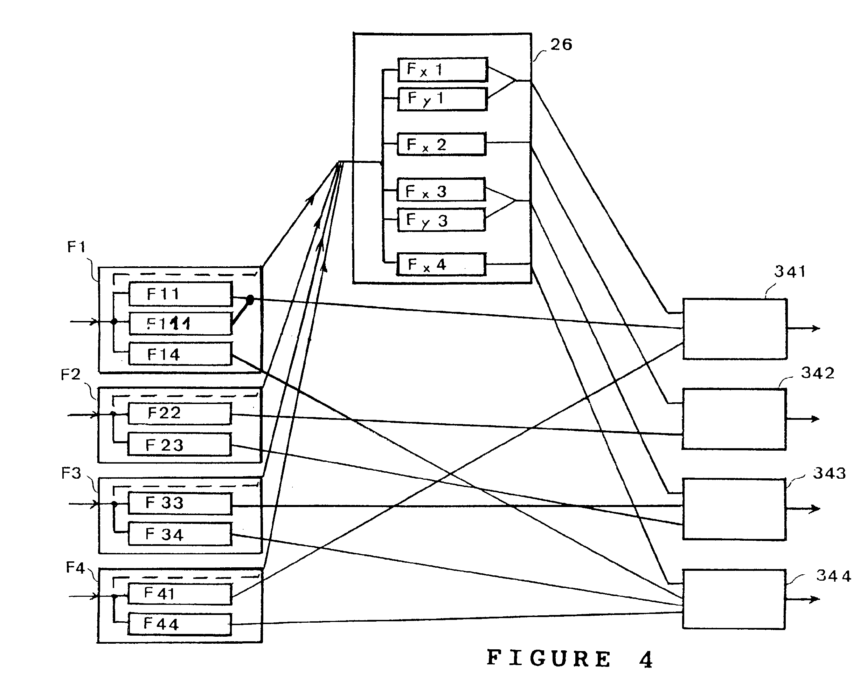

Les ensembles de filtres sont organisés selon une hiérarchie à deux niveaux, illustrée sur la figure 4, avec, d'une part, les ensembles de filtres 24, 25 et, d'autre part, l'ensemble de filtres 26.

Au niveau inférieur, à gauche sur la figure 4, se trouvent des ensembles F1 (ou 24), F2 (ou 25), F3 et F4, de filtres de voie, ensembles qui traitent chacun les données reçues par l'une des cartes 1-4, c'est-à-dire qui sont liés, au moins logiquement, à un port d'entrée. Chaque filtre F d'un de ces ensembles F1 - F4 de niveau 2 est repéré ici par des chiffres, le premier indiquant le rang de la carte, ou port d'entrée, 1 à 4 concernée et le second indiquant le rang du canal d'émission, c'est-à-dire de la file d'attente en émission 341 à 344 destinée à recevoir les données sélectionnées par filtrage par le filtre considéré. Dans cet exemple, les filtres F11 et F111 sont strictement en parallèle, en entrée et sortie, et ne diffèrent que par une ou plusieurs valeurs de critère de sélection. Pour les filtres de l'ensemble 26, de niveau 3, non liés à une carte d'entrée 1-4 particulière, la lettre (x, y) qui remplace le premier des deux chiffres ci-dessus indique un jeu de différents critères de sélection. Par niveau 2, on fait référence à l'architecture OSI (Interconnexion des Systèmes Ouverts) de l'ISO. Le niveau 2 concerne par exemple la définition du format des paquets de données échangés, c'est-à-dire leur taille et la signification de chaque bit du champ d'en-tête, ou encore les problèmes d'adaptation de la vitesse de transmission. Il sert donc à établir une liaison de données entre deux appareils correspondants, pour que chacun puisse comprendre les données de signalisation qu'il reçoit de l'autre.

Les critères de sélection du niveau 2, dans les registres 43-45, portent sur les données d'en-tête des paquets ETHERNET, comme l'adresse ETHERNET de leur émetteur et de leur destinataire ou encore la longueur du paquet reçu ou le type de protocole de niveau OSI 3 relatif aux données du paquet. Il peut n'y avoir qu'un seul critère de sélection par filtre 24-26 (monofiltrage).

Les filtres de niveau supérieur 26 sont dits de niveau OSI 3. Le niveau 3 utilise le niveau 2 pour établir un dialogue logique entre appareils, selon un protocole de transmission déterminé, afin d'établir une communication logique de transmission de données utiles, au moyen d'un échange de signalisations d'établissement de la communication.

Les filtres de l'ensemble 26 de niveau 3, non associés à une carte d'entrée 1-4 particulière, forment un banc de filtres en parallèle recevant les flux entrants des quatre cartes 1-4 et analysent en particulier des données de protocole de niveau 3 contenues dans le champ 52. Afin de limiter les tâches de filtrage, les filtres de l'ensemble 26 de niveau 3 reçoivent, ici, uniquement les paquets de données non sélectionnés par les ensembles de filtres F1 à F4 de niveau 2, liés à une voie de réception. Un ensemble de filtres comme F1 associé à une carte 1-4 peut donc avoir N sorties, vers les N canaux d'émission, et 1 sortie vers l'ensemble de filtres 26 de niveau 3. Chacune de ces sorties vers un canal d'émission peut correspondre à plusieurs filtres fonctionnellement en parallèle en entrée et en sortie. Lorsque la mémoire 27 fonctionne comme filtre passe-tout pour les rebuts uniquement des filtres 24, 25 de niveau 2, elle est donc un filtre fonctionnellement en parallèle avec, ou en tête de, l'ensemble 26, et elle a pour effet de détourner de celui-ci tous les datagrammes reçus par la mémoire-filtre 27. L'ensemble 26 est alors désactivé. Comme évoqué plus haut, la mémoire-filtre 27 peut n'être associée qu'à une partie des filtres (24, 25), l'ensemble 26 conservant alors une activité.

Le fonctionnement de l'ensemble des circuits représentés, et en particulier du filtre 241, va maintenant être expliqué plus en détails. Les filtres présentent tous la structure de celui qui est représenté. L'explication va donc porter sur celui-ci.

Dans une phase d'initialisation, le filtre 241, ici de niveau 2, est individualisé par le numéro PID du canal d'émission qu'il doit alimenter en données. Ce numéro PID est par exemple saisi au clavier du PC 8 et inscrit dans le registre 46 par l'unité centrale 41. Le registre 46 reçoit de même, de l'unité centrale 41, des données spécifiant un niveau de qualité des informations du champ 52, c'est-à-dire leur niveau d'intérêt, qui peut encore être traduit en un niveau d'urgence ou de priorité pour leur émission. Le registre 46 et le champ 53 sont donc relatifs au traitement des paquets en aval des étages de filtrage sur les critères de sélection.

Par ailleurs, les registres 43-45 reçoivent chacun, de la mémoire de critères de sélection 42 adressée par l'unité centrale 41, un bloc de données, de quelques bits à quelques octets, représentant une valeur d'un critère spécifique à chaque registre 43-45. Chaque registre 43-45 peut, dans cet exemple, recevoir plusieurs valeurs d'un même critère, c'est-à-dire que le filtre physique représenté 241 est un filtre logique à ici plusieurs voies logiques, chaque voie logique de filtrage, ou sélection, correspondant à un jeu particulier des divers critères. Les jeux diffèrent entre eux par la valeur d'au moins l'un des critères.

Le fonctionnement en exploitation du filtre 241 va maintenant être décrit.

Un paquet de données provenant du réseau ETHERNET 10 ayant été reçu et rangé dans les champs 51, 52 du registre d'entrée 50, le contenu du champ 51 va être comparé au contenu des registres 43-45 pour déterminer s'il y a coïncidence ou reconnaissance des critères prévus et donc alors transférer le champ de données 52, ainsi filtré, vers la file d'émission de sortie 341-344 du canal considéré.

Pour cela, l'unité centrale 41 balaie en lecture en synchronisme, octet par octet, le champ 51 et les registres 43-45 pour en comparer les contenus dans le comparateur à 8 bits 48. L'unité centrale 41 adresse, pour ce faire, les multiplexeurs 47 et 57 pour, d'une part, lire un premier octet du registre 43 et, d'autre part, un octet du champ 51. Celui-ci y occupe une position dans laquelle il est prévu, d'après le format des paquets ETHERNET, que se trouve le début d'un bloc de données correspondant au critère du registre 43, par exemple l'adresse ETHERNET du destinataire du paquet reçu. En cas d'égalité des deux octets ci-dessus, la porte ET 59 déverrouille le passage du signal d'horloge H1, qui commande la mémorisation du 1 logique, de polarisation d'entrée, dans le registre à décalage 60. Les registres 60 et 72 sont initialement mis à zéro par l'unité centrale 41, par une entrée non représentée.

L'unité centrale 41 reçoit, dans cet exemple, la sortie de la porte ET 59, pour ne passer à l'octet suivant du registre 43 et du champ 51 qu'en cas de succès dans la comparaison actuelle. En pareil cas, les octets du registre 43 sont chacun comparés successivement à leur homologue du champ 51. En cas de coïncidence à chaque comparaison des octets d'un critère, le registre 60 est alors rempli de "1" et, après la comparaison relative au dernier octet du critère considéré, la porte ET 70 déverrouille le passage pour le signal d'horloge H2, indiquant que la valeur du critère, ici l'adresse ETHERNET du destinataire, a été reconnue.

Les huit portes OU de masquage de bit 51-58 permettent d'effectuer au besoin des comparaisons sur 1 à 7 bits, en forçant à l'état 1 la sortie de celle(s) des portes 51-58 dont le bit ne doit pas être pris en compte.

De même, les six portes OU de masquage 61-66, peuvent être individuellement forcées à 1 par l'unité centrale 41, pour masquer des octets entiers, par exemple si le critère à reconnaître a une longueur inférieure au maximum ici prévu de six octets. L'unité centrale 41 a en mémoire tous les masques nécessaires. La porte ET 70 laisse passer une impulsion positive d'horloge H2 et le registre à décalage 72 mémorise l'état 1 polarisant son entrée de donnée. Cette impulsion remet à zéro le registre 60 par une entrée RAZ de celui-ci.

Un nouveau cycle recommence alors, pour un deuxième critère, contenu dans le registre 44, par exemple la longueur du paquet 51, 52 reçu, spécifiée dans le champ 51. En cas de reconnaissance de la longueur de paquet prévue, le registre à décalage 72 mémorise à nouveau un 1 logique.

Une fois achevés avec succès tous les cycles, ici trois, de reconnaissance des critères des registres 43-45, le registre 72 comporte alors autant de 1 logiques qu'il y a de critères et la porte ET 73 est alors déverrouillée pour laisser passer le signal d'horloge H3 qui va vider le registre 50 vers les circuits de transfert et d'aiguillage 31. Par souci de clarté, on n'a pas représenté une rangée de portes de masquage interposée entre le registre 72 et la porte ET 73, permettant de faire varier le nombre de critères. Préalablement au vidage du registre 50, l'unité centrale 41 remplit le champ 53 à partir du registre 46 pour associer, au champ de données 52, les informations de commande des circuits 31 et 33, c'est-à-dire le PID et le niveau d'urgence, nécessaires à son traitement et à son aiguillage vers la file d'attente 341 à 344 prévue. Le PID commande la lecture d'une table des circuits 33 qui commande le reste de ceux-ci en spécifiant le mode de mise en paquets (format des paquets TP et autres), que les circuits 33 devront suivre, et de paramètres ou données d'adressage, ou d'aiguillage, vers la file d'attente d'émission 341-344 du canal considéré, pour commander les circuits 31 de transfert et d'aiguillage des paquets vers l'un des canaux d'émission.

Le signal d'horloge H3 fournit un nombre d'impulsions de décalage du registre 50 tel que les champs 52 et 53 sont seuls transférés vers les circuits de mise en paquets 33, le champ 51 étant ainsi éliminé après son analyse, ou filtrage de sélection du champ 52. Les données de numéro PID du champ 53 commandent les circuits 31 pour adresser ou aiguiller les données 52, 53 vers le canal de numéro PID à travers les circuits 33 de mise en paquets TP. On remarquera que le registre 50 peut constituer un registre d'entrée indépendant d'un filtre particulier, en ce sens qu'il peut être associé à plusieurs tels filtres, associés à une même carte 1-4, qui le lisent et dont l'un pourra le vider vers le circuit 33 de mise en paquets. En particulier le registre 50 peut être un sous-ensemble de la mémoire tampon 23, accessible en lecture à partir de tout filtre. Une mémoire à accès aléatoire RAM peut donc aussi convenir comme mémoire tampon lue par plusieurs filtres, son contenu pouvant donc être recopié et transféré vers les circuits 31, par un ou plusieurs de ces filtres, sans risque d'interférences entre ceux-ci.

Les cas d'insuccès dans la reconnaissance ci-dessus de critères de sélection par filtrage, ou tri, des octets vont maintenant être précisés.

Si, par exemple, après reconnaissance du critère du registre 43 le premier octet du registre 44 est reconnu dans le champ 51 mais que le deuxième ne l'est pas, l'unité centrale 41, lisant l'état 0 de la porte 59 de validation des octets au moment où elle émet une impulsion positive d'horloge H1, détecte la non reconnaissance de l'octet considéré.

En pareil cas, et si le registre 44 ne contient qu'une valeur du critère qu'il traite, ici la longueur de paquet, les registres 72 et 60 qui contiennent chacun un 1 logique indiquant respectivement la reconnaissance du premier critère (adresse) et la reconnaissance du premier octet du deuxième critère (longueur), sont remis à zéro par l'unité centrale 41.

Par contre, si le filtre 241 comporte une autre valeur du critère (longueur) sur lequel il vient d'y avoir échec de reconnaissance, seul le registre 60, de validation d'octets d'un critère, est remis à zéro et l'unité centrale 41 recommence un nouveau cycle de tentative de reconnaissance du critère (longueur) sur la deuxième valeur mémorisée dans le registre 44. Les registres 43-45 ont donc, outre une entrée de mémorisation, une ou des entrées d'adressage de diverses portions de registre.

Les données du champ 52, des datagrammes reçus qui satisfont aux critères de filtrage, sont mises sous la forme de paquets TP de taille prédéterminée dans les circuits 33. Les circuits 33 de mise en paquets TP comportent différents sous-ensembles en parallèle, chacun spécialisé dans un traitement déterminé de mise en paquets, pour le canal d'émission auquel ils sont liés. Les circuits d'aiguillage 31 comportent quatre multiplexeurs, un par file d'attente d'émission 341-344, qui sont commandés par les données d'aiguillage du champ 53 pour aiguiller les paquets sélectionnés, à travers les circuits de mise en paquets 33, vers la file d'attente d'émission 341-344 prévue, grâce au numéro PID du champ 53. Les données du champ 53 qui spécifient le niveau d'urgence des données du champ 52 servent, dans les circuits en aval du filtre considéré, à définir des priorités de diffusion relatives entre les divers champs 52 de paquets sélectionnés.

Comme indiqué, tout filtre de l'ensemble 26 de niveau 3 a une structure semblable à celle du filtre 241 représenté, en pouvant filtrer le champ 52, mais est alimenté en données à filtrer depuis toutes les cartes 1-4 pour en recevoir le champ 52 des paquets reçus que les filtres F1-F4 de niveau 2 n'ont pas reconnu. L'unité centrale 41 commande en pareil cas le vidage du registre 50 associé au filtre d'un ensemble F1 - F4 de niveau 2, le champ 53 restant vide, vers un registre comme le registre 50 du banc de filtres 26 de niveau 3. Ce vidage du registre 50 s'effectue sous la commande d'un signal d'horloge appliqué à une autre entrée d'horloge du registre 50, les données du champ 52 étant alors aiguillées, par un démultiplexeur non représenté des circuits 31, vers l'ensemble de filtres 26, de protocole, et non plus vers les circuits 33 de mise en paquets TP. L'ensemble de filtres 26 comporte en entrée plusieurs registres comme 50, ou une mémoire RAM, pour vider immédiatement, et donc libérer, les registres 50 associés aux filtres F1 - F4 de niveau 2, dès que ces derniers détectent un échec définitif sur un critère.

L'ensemble de filtres 26 de niveau 3 constitue des filtres logiques de protocole traitant des critères liés au dialogue logique, ou protocole, entre appareils en communication, donc ici entre serveurs et récepteurs des canaux diffusés. En particulier, le champ 52 lu par les filtres 26 peut contenir un paquet de données INTERNET, c'est-à-dire à la fois des données utiles et des données de signalisation du protocole de communication IP de l'INTERNET. En d'autres termes, le champ 51 ne sert qu'au transport dans l'ETHERNET 10 de paquets au format INTERNET qui, une fois remis à leur destinataire 1-4 et acceptés par analyse du champ 51 ou simplement reçus physiquement et mémorisés, sont analysés quant à la signification des signalisations du protocole INTERNET dans le champ 52, pour sélectionner les données du flux considéré d'après les données de protocole.

Dans cet exemple, l'ensemble de filtres 26 de niveau 3 est, d'un point de vue fonctionnel, en parallèle avec les filtres F1 - F4 de niveau 2 (pointillés sur la figure 4) et s'affranchit du contenu du champ d'en-tête ETHERNET 51.

Les critères de sélection des filtres de l'ensemble 26 de niveau 3 sont ici les adresses IP dans l'INTERNET, source et destinataire, des données reçues, de même que le type de protocole d'échange de données utilisé, reconnu d'après les signalisations transportées, la longueur du paquet INTERNET du champ 52, le type de protocole des datagrammes IP ou encore un champ de qualité de service ou niveau d'urgence de datagramme.

## Revendications

1. Emetteur de diffusion de données numériques comportant des moyens de réception de divers flux de données entrants sur des canaux de réception respectifs (1-4, 23, 50), des moyens (31, 33) de transfert de données des flux vers des canaux d'émission (341 - 344) et, entre les moyens de réception (1-4, 23, 50) et les moyens de transfert (31, 33), des moyens de filtrage logique (24-26) agencés pour sélectionner des données des flux entrants des canaux de réception (1 - 4, 23, 50) et pour les aiguiller par l'intermédiaire des moyens de transfert (31, 33) vers des canaux d'émission (341 - 344) déterminés en fonction de la sélection.

2. Emetteur selon la revendication 1, dans lequel les moyens de filtrage (24-25) sont agencés (57) pour lire un champ d'en-tête (51) d'un paquet (51, 52) d'un flux de données reçu par les moyens de réception (1 - 4, 23, 50) et pour en éliminer l'en-tête (51) avant d'aiguiller le reste (52) du paquet vers le canal d'émission (341 - 344).

3. Emetteur selon l'une des revendications 1 et 2, dans lequel les moyens de filtrage (24-26) sont agencés pour placer, dans un paquet transféré, des données de commande (46, 53) des moyens de transfert (31, 33), pour aiguiller le paquet vers l'un des canaux d'émission (341-344).

4. Emetteur selon l'une des revendications 1 à 3, dans lequel les moyens de filtrage (24-26) comportent divers filtres logiques de voie (24, 25) pour filtrer chacun l'un de divers flux entrants de données.

5. Emetteur selon l'une des revendications 1 à 4, dans lequel les moyens de filtrage comportent des filtres logiques de protocole (26) agencés pour lire des données de protocole de communication dans les moyens de réception (50) des flux entrants et pour sélectionner les données du flux considéré d'après les données de protocole.

6. Emetteur selon les revendications 4 et 5, dans lequel les filtres de voie (24, 25) et les filtres de protocole (26) sont agencés pour que ces derniers reçoivent uniquement les données non sélectionnées par les filtres de voie (24, 25).

7. Emetteur selon l'une des revendications 1 à 6, dans lequel les moyens de filtrage (24-26) sont agencés pour associer, aux données sélectionnées, des données (53) représentant un niveau d'urgence pour leur émission.

8. Emetteur selon l'une des revendications 1 à 7, dans lequel les moyens de filtrage (24-26) sont agencés pour associer, aux données sélectionnées, des données (53 ; PID) de commande d'une table des moyens de transfert (31, 33) spécifiant un format pour mettre les données sous forme de paquets d'émission.

9. Emetteur selon l'une des revendications 1 à 8, dans lequel les moyens de filtrage (24-26) comportent des filtres logiques (241) agencés pour chacun reconnaître plusieurs valeurs d'un même critère de sélection des données à sélectionner.

10. Emetteur selon l'une des revendications 1 à 9, dans lequel les moyens de filtrage comportent des filtres logiques (241) qui sont chacun agencés pour reconnaître successivement, un par un, des octets de données d'un critère de sélection des données à sélectionner et qui comprennent des portes (51-58) de masquage individuel de bits pour traiter des octets incomplets.
